# EUROPÄISCHE PATENTSCHRIFT

(11) **EP 1 721 379 B1**
(45) Veröffentlichungstag und Bekanntmachung des Hinweises auf die Patenterteilung: **05.10.2011**
(21) Anmeldenummer: 05707129.2
(22) Anmeldetag: 01.02.2005
(51) Int. Cl.: H02K 3/52

(54) **SCHENKELPOLMASCHINE MIT MINDESTENS EINER POLSPULE**
SALIENT-POLE MACHINE COMPRISING AT LEAST ONE FIELD COIL
MACHINE A POLES SAILLANTS AYANT AU MOINS UNE BOBINE DE CHAMP

(30) Priorität: 12.02.2004 EP 04003171
(43) Veröffentlichungstag der Anmeldung: 15.11.2006
(73) Patentinhaber: SIEMENS AKTIENGESELLSCHAFT, 80333 München (DE)
(72) Erfinder: ADOLF, Haiko, 99099 Erfurt (DE); HAUTKE, Günther, 99195 Stotternheim (DE); MÖBIUS, Jens, 99100 Bienstädt (DE)
(86) Internationale Anmeldenummer: PCT/EP2005/000994
(87) Internationale Veröffentlichungsnummer: WO 2005/078898

(56) Entgegenhaltungen:
- EP-A- 0 008 250
- EP-A- 0 052 383
- FR-A- 2 180 658
- PATENT ABSTRACTS OF JAPAN Bd. 015, Nr. 365 (E-1111), 13. September 1991 (1991-09-13) -& JP 03 143239 A (TOSHIBA CORP), 18. Juni 1991 (1991-06-18)
- PATENT ABSTRACTS OF JAPAN Bd. 015, Nr. 082 (E-1038), 26. Februar 1991 (1991-02-26) -& JP 02 299438 A (TOSHIBA CORP), 11. Dezember 1990 (1990-12-11)
- PATENT ABSTRACTS OF JAPAN Bd. 009, Nr. 023 (E-293), 30. Januar 1985 (1985-01-30) -& JP 59 169348 A (TOSHIBA KK), 25. September 1984 (1984-09-25)

## Beschreibung

Die Erfindung betrifft eine Schenkelpolmaschine mit mindestens einer sich in einer axialen Richtung der Schenkelpolmaschine erstreckenden Polspule, die unter einem Polschuh an einem Laufkörper angeordnet ist.

Bei Schenkelpolmaschinen, wie z.B. Schenkelpolgeneratoren, bereitet die Kühlung der Pol- bzw. Erregerwicklung eines zugehörigen Schenkelpolläufers oft erhebliche technische Schwierigkeiten. Während es für die Kühlluftführung in Pollücken des Schenkelpolläufers bereits eine Reihe von technisch einwandfreien und funktionsfähigen Vorschlägen gibt, sind die bisher bekannten Maßnahmen zur Polspulenkühlung, also der Abfuhr der Wärme zur Begrenzung der Temperatur der Polspulen von Schenkelpolmaschinen, bisher wenig befriedigend. So ist beispielsweise aus EP 0 415 057 B1 eine Anordnung zur forcierten Zufuhr eines Kühlmediums in einen Spalt zwischen einem Polkern des Läuferkörpers und der Polspule bekannt, bei der im Spalt zwischen Polkern und Polspule eine Leiteinrichtung vorgesehen ist, welche den Spalt in zwei Räume unterteilt, die im Wesentlichen nur am polkappenseitigen Ende des Spalts in freier Verbindung stehen und ansonsten nacheinander durchströmt werden. Eine solche Leiteinrichtung ist jedoch vergleichsweise aufwendig herzustellen und bedarf einer entsprechend angepassten, besonderen Montage.

Aus DE 198 10 628 A1 ist ein Belüftungssystem für die Erregerwicklung bzw. Polspule großer Schenkelpolmaschinen bekannt, bei dem parallel zu dem Strömungsweg in der Pollücke zusätzlich Strömungswege im Kopf von Flachkupferleitern der Polspule ausgebildet sind. Die damit ausgebildeten parallelen Strömungswege durchlaufen alle Flachkupferleiter und die zugehörigen Isolierschichten. Die Strömungswege schwächen jedoch die Polspulen und führen unter bestimmten Umständen nicht zu der erwarteten Kühlleistung.

Das Dokument JP-03 143 239 offenbart eine Möglichkeit Polspulen anzubringen.

In der JP 2 299 438 wird eine verbesserte Möglichkeit offenbart eine Polspule mittels einer Feder anzubringen.

Die Fr 2 180 658 offenbart eine weitere Möglichkeit mittels einer Feder eine Polspule anzubringen.

Der Erfindung liegt die Aufgabe zugrunde, eine Schenkelpolmaschine der eingangs genannten Art dahingehend zu verbessern, dass die am Läuferkörper angeordneten Polspulen auf vergleichsweise kostengünstige Art besser gekühlt werden.

Die Aufgabe wird durch eine Schenkelpolmaschine gemäß Anspruch 1 gelöst..

Durch die Abstützung der Polspule durch eine oder mehrere unter der Polspule angeordnete Federn und wird zugleich ein axialer Kühlkanal geschaffen, durch den Kühlmedium zu den Polspulen zugeführt werden kann. Diese Art der Kühlung von Polspulen erfordert keine zusätzliche Leiteinrichtung und ist daher vergleichsweise kostengünstig herzustellen und zu montieren. Durch die Abstützung der Polspule durch eine oder mehrere unter der Polspule angeordnete Blattfedern, können Querschnitte geschaffen werden, die einen vergleichsweise geringen Strömungswiderstand aufweisen. Die geschaffenen Räume können daher besonders gut für eine axiale Kühlmediumsführung unterhalb der Polspule genutzt werden.

Bei der erfindungsgemäßen Schenkelpolmaschine ist die zwischen der Polspule und dem Läuferkörper vorgesehene Feder mit mindestens einem im Wesentlichen U-förmigen Abschnitt ausgebildet und mit einem der beiden Schenkel dieses im Wesentlichen U-förmigen Abschnitts ist die Polspule gegen den zugehörigen Polschuh gedrängt. Der Raum im Inneren des U-förmigen Abschnitts dient dann als Durchlass zum Bilden des erfindungsgemäßen axialen Kühlkanals.

Darüber hinaus ist eine Feder mit zwei im Wesentlichen U-förmigen, einander teilweise überdeckenden Abschnitten vorgesehen, die gemeinsam im Wesentlichen eine O-Form bilden, welche an einer Stelle geöffnet ist. Eine solche "ringförmige" Feder kann bei entsprechender Gestaltung in radialer Richtung eine hohe Federkraft aufbringen und stellt dennoch in ihrem Inneren eine vergleichsweise große Durchgangsöffnung als Kühlkanal zur Verfügung.

Ferner können mit einer solchen O-förmigen Feder zwei Polspulen gegen jeweils einen zugehörigen Polschuh gedrängt werden, so dass insgesamt nur vergleichsweise wenige Federn an einer solchen erfindungsgemäßen Schenkelpolmaschine einzusetzen sind. Die eingesetzten O-förmigen Federn sollten mit ihrer Öffnung dabei so angeordnet sein, dass diese zu einer zwischen den beiden Polspulen angeordneten Spulenstütze gerichtet sind.

Darüber hinaus sollte die O-förmige Feder mit mindestens einem Befestigungsmittel an der der Öffnung der O-Form gegenüberliegenden Seite der O-Form am Läuferkörper befestigt sein. Die Feder ist dann am Läuferkörper sicher gehaltert, während ihre beiden im Wesentlichen halbzylinderischen Federarme jeweils eine von zwei Polspulen gegen den zugehörigen Polschuh drängen.

Die Federsteifigkeit der erfindungsgemäß vorgesehenen Feder sollte vorteilhaft zwischen ca. 1 und 4 N/mm, insbesondere zwischen ca. 2 und 3 N/mm liegen. Mit einer solchen Feder kann beispielsweise eine geforderte Polspulen- bzw.

Wicklungshöhentoleranz von +/- 2mm ausgeglichen werden. Um die geforderte Federsteifigkeit zu erreichen, können auch zwei Blattfedern ineinander oder nebeneinander eingesetzt werden. Die Flächenlast zwischen der Feder und der Polspule bzw. einem dort angeordneten Isolationselement (beispielsweise einem GFK-Teil, d.h. einem glasfaserverstärkten Kunststoff) sollte in den Grenzen von ca. 20 - 30 N/mm² liegen.

Hinsichtlich der Gestaltung der erfindungsgemäßen Feder ist es schließlich auch vorteilhaft, wenn die Feder derart geformt ist, dass im gespannten Zustand ihr Anlagepunkt bzw. Bereich an der zugehörigen Polspule oder an einem dort angeordneten Isolationselement von der Schwerpunktachse der Polspule geringfügig entfernt ist. Der Abstand zwischen Schwerpunktachse und Anlagepunkt sollte insbesondere zwischen 2 und 5 mm, am Bevorzugtesten 3,5 mm betragen. Eine solche geringfügige Verschiebung des Anlagepunkts der erfindungsgemäßen Feder führt vorteilhaft insbesondere zu einem größeren Federweg und einem flacheren Verlauf der Federkraft.

Um die erfindungsgemäß verbesserte Kühlung der Polspulen einer Schenkelpolmaschine weiter zu optimieren, sollte in der mindestens einen Polspule mindestens ein im Wesentlichen radial gerichteter Kühlkanal ausgebildet sein, mittels dem eine fluidleitende Verbindung zwischen dem genannten axialen Kühlkanal und der Außenseite des Polschuhs hergestellt ist.

Nachfolgend wird ein Ausführungsbeispiel einer erfindungsgemäßen Schenkelpolmaschine anhand der beigefügten schematischen Zeichnungen näher erläutert. Es zeigt:
Fig. 1 einen Teilquerschnitt eines Schenkelpolläufers eines Ausführungsbeispiels einer erfindungsgemäßen Schenkelpolmaschine und

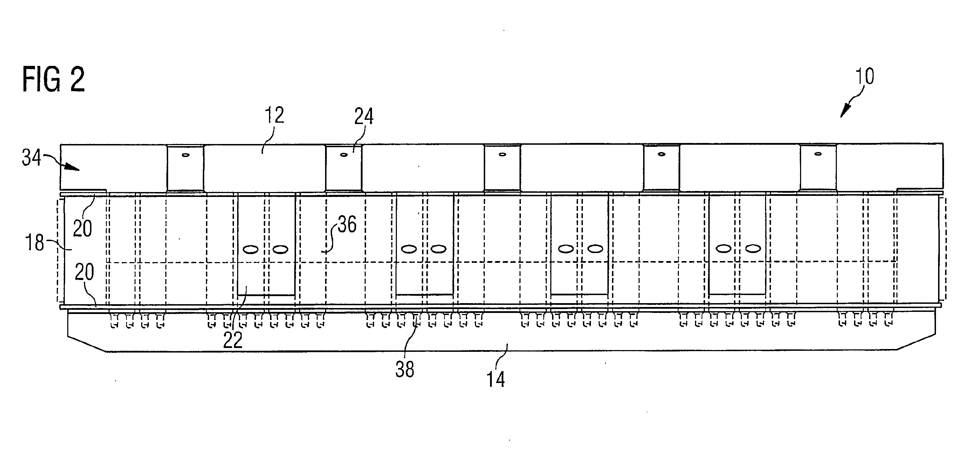

Fig. 2 einen Längsschnitt des Schenkelpolläufers gemäß Fig. 1.

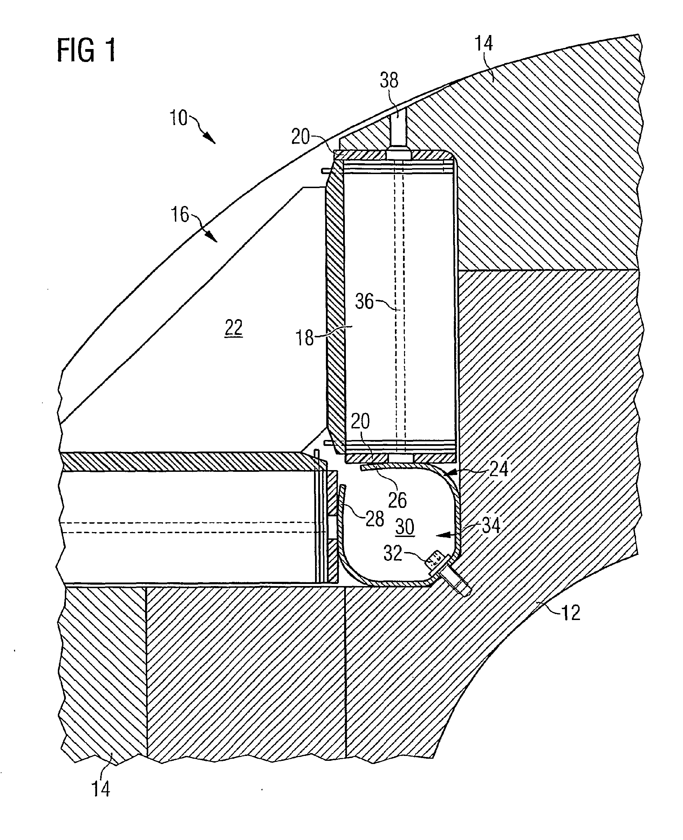

In Fig.1 ist ein im Wesentlichen zylindrischer Schenkelpolläufer 10 eines Schenkelpolgenerators dargestellt, der einen Läuferkörper 12 und an dessen Außenseite angeordnete längliche Polschuhe 14 aufweist. Zwischen jeweils zwei länglichen Polschuhen 14 ist eine im Wesentlichen im Querschnitt dreieckige Aussparung 16 ausgebildet, die sich in Gestalt einer Nut ebenfalls über die gesamte Länge des Läuferkörpers 12 erstreckt.

In einer einzelnen Aussparung 16 sind jeweils zwei sich in der axialen Richtung des Schenkelpolläufers 10 erstreckende Polspule 18 angeordnet, die jeweils in einem Isolierrahmen 20 eingebetet sind. Die Polspulen 18 liegen jeweils an den Schenkelseiten der im Querschnitt dreieckigen Aussparung 16 am Läuferkörper 12 an und sind an ihren radial äußeren Endbereichen von jeweils einem Polschuh 14 umgriffen. Zwischen den beiden Polspulen 18 ist eine ebenfalls im Querschnitt im Wesentlichen dreieckige Spulenstütze 22 angeordnet, mittels der die Polspulen in der Aussparung 16 zurückgehalten sind.

Im radial nach innen gerichteten Endbereich der im Querschnitt dreieckigen Aussparung 16 sind über die Längserstreckung des Schenkelpolläufers 10 hinweg regelmäßig verteilt angeordnete Blattfedern 24 eingesetzt. Diese Blattfedern sind aus einem gebogenen Federstahl hergestellt und weisen in der in Figur 1 dargestellten Querschnittsansicht im Wesentlichen eine O-Form auf. Diese O-Form ist mit zwei im Wesentlichen halbzylindrischen Federarmen 26 und 28 gebildet, zwischen denen sich eine die O-Form durchbrechende Öffnung 30 befindet. An der von der Öffnung 30 diametral gegenüberliegenden Seite der O-Form der Blattfeder 24 ist diese mit einem Befestigungsmittel 32 in Gestalt einer Bolzenschraube am Läuferkörper 12 angeschraubt.

Über die Länge des Schenkelpolläufers 10 sind insgesamt fünf Blattfedern 24 regelmäßig verteilt angeordnet. Mit Hilfe dieser Blattfedern 24 sind die Polspulen 18 jeweils gegen den zugehörigen Polschuh 14 im Wesentlichen radial nach außen gedrängt und durch den dabei hergestellten Abstand zwischen den Polspulen 18 und dem Läuferkörper 12 ist ein axialer Kühlkanal 34 geschaffen, durch den ein Kühlmedium (in der Regel Luft) zum Kühlen der Polspulen 18 der Schenkelpolmaschine 10 eingeführt werden kann. Zur Schaffung dieses Kühlkanals 34 ist die O-Form der Blattfedern 24 besonders von Vorteil, denn diese O-Form weist eine vergleichsweise Durchgangsöffnung auf und setzt dem Kühlmedium daher einen vergleichsweise geringen Kühlwiderstand entgegen.

Damit das durch den axialen Kühlkanal 34 zugeführte Kühlmedium besonders wirksam die an den Polspulen 18 entstehende Wärmeenergie aufnehmen kann, sind die Polspulen 18 jeweils von einer Vielzahl von radialen Kühlkanälen 36 durchsetzt, die in axialer Richtung insbesondere zwischen jeweils zwei Blattfedern 24 in den Polspulen 18 ausgebildet sind. Die radialen Kühlkanäle 36 erstrecken sich ausgehend vom axialen Kühlkanal 34 durch den Isolationsrahmen 20 und die zugehörige Polspule 18. Sie führen zu zugehörigen Luftaustrittsöffnungen 38, die die beigeordneten Polschuhe 14 durchsetzen und zur Außenseite des Schenkelpolläufers 10 führen. Durch die radialen Kühlkanäle kann auf diese Weise das durch die axialen Kühlkanäle 34 zugeführte Kühlmedium durch die Polspulen 18 hindurch abgeführt werden.

## Patentansprüche

1. Schenkelpolmaschine mit mindestens einer sich in einer axialen Richtung der Schenkelpolmaschine erstreckenden Polspule (18), die unter einem Polschuh (14) an einem Läuferkörper 12 angeordneten ist,
wobei die Polspule (18) mittels mindestens einer zwischen der Polspule (18) und dem Läuferkörper (12) angeordneten Feder (24) gegen den Polschuh (14) gedrängt ist, wobei durch den von der Feder (24) zwischen der Polspule (18) und dem Läuferkörper (12) hergestellten Abstand ein axialer Kühlkanal (34) geschaffen ist,
wobei die Feder (24) zwei im Wesentlichen U-förmige, einander teilweise überdeckende Abschnitte (26; 28) aufweist, wobei mittels der Feder (24) zwei Polspulen (18) gegen jeweils einen zugehörigen Polschuh 14 gedrängt sind,
**dadurch gekennzeichnet,**
**dass** die Abschnitte (26; 28) gemeinsam im Wesentlichen eine O-Form bilden, welche an einer Stelle (30) geöffnet ist und
**dass** die Öffnung (30) der O-Form zu einer zwischen den beiden Polspulen (18) angeordneten Spulenstütze (22) gerichtet angeordnet ist.

2. Schenkelpolmaschine nach Anspruch 1,
**dadurch gekennzeichnet, dass**
die Feder (24) eine insbesondere gebogene Blattfeder ist.

3. Schenkelpolmaschine nach Anspruch 1,
**dadurch gekennzeichnet, dass**
die Feder (24) mit mindestens einem Befestigungsmittel (32) an der Öffnung (30) der O-Form gegenüberliegende Seite der O-Form am Läuferkörper (12) befestigt ist.

4. Schenkelpolmaschine nach einem der Ansprüche 1 bis 3, **dadurch gekennzeichnet, dass**
die Feder (24) eine Federsteifigkeit von zwischen ca. 1 und 4 N/mm insbesondere zwischen ca. 2 und 3 N/mm aufweist.

5. Schenkelpolmaschine nach einem der Ansprüche 1 bis 4, **dadurch gekennzeichnet, dass**
die Feder (24) derart geformt ist, dass im gespannten Zustand ihr Anlagepunkt an der zugehörigen Polspule (18) oder einem dort angeordneten Isolationselement (20) von der Schwerpunktachse der Polspule (18) geringfügig entfernt ist, insbesondere in einem Abstand von zwischen 2 und 5 mm, am bevorzugtesten in einem Abstand von ca. 3,5 mm.

6. Schenkelpolmaschine nach einem der Ansprüche 1 bis 5, **dadurch gekennzeichnet, dass**
in der mindestens einen Polspule (18) mindestens ein im Wesentlichen radial gerichteter Kühlkanal (36) ausgebildet ist, mittels dem eine fluidleitenden Verbindung zwischen dem genannten axialen Kühlkanal (34) und der Außenseite des Polschuhs (14) hergestellt ist.

## Claims

1. Salient-pole machine comprising at least one field coil (18), which extends in an axial direction of the salient-pole machine and is arranged on a rotor body (12) beneath a pole shoe (14), the field coil (18) being forced against the pole shoe (14) by means of at least one spring (24), which is arranged between the field coil (18) and the rotor body (12), an axial cooling channel (34) being created by the gap produced by the spring (24) between the field coil (18) and the rotor body (12), the spring (24) having two essentially U-shaped sections (26; 28) which partially overlap one another, two field coils (18) being forced against in each case one associated pole shoe (14) by means of the spring (24), **characterized in that** the sections (26; 28) together form essentially an O shape, which is open at one point (30) and **in that** the opening (30) in the O shape is arranged such that it points towards a coil support (22) arranged between the two field coils (18).

2. Salient-pole machine according to Claim 1, **characterized in that** the spring (24) is an in particular bent leaf spring.

3. Salient-pole machine according to Claim 1, **characterized in that** the spring (24) is fixed to the rotor body (12) using at least one fixing means (32) on that side of the O shape which is opposite the opening (30) in the O shape.

4. Salient-pole machine according to one of Claims 1 to 3, **characterized in that** the spring (24) has a spring stiffness of between approximately 1 and 4 N/mm, in particular between approximately 2 and 3 N/mm.

5. Salient-pole machine according to one of Claims 1 to 4, **characterized in that** the spring (24) is formed such that, in the stressed state, its bearing point on the associated field coil (18) or an insulating element (20) arranged there is at a slight distance from the axis of gravity of the field coil (18), in particular at a distance of between 2 and 5 mm, most preferably at a distance of approximately 3.5 mm.

6. Salient-pole machine according to one of Claims 1 to 5, **characterized in that** at least one cooling channel (36) is formed in the at least one field coil (18), which cooling channel (36) points essentially radially and by means of which cooling channel a fluid-conducting connection is produced between the mentioned axial cooling channel (34) and the outside of the pole shoe (14).

## Revendications

1. Machine à pôles saillants ayant au moins une bobine ( 18 ) polaire s'étendant dans une direction axiale de la machine à pôles saillants et montée sur une pièce ( 12 ) de rotor sous un épanouissement ( 14 ) polaire,
dans laquelle la bobine ( 18 ) polaire est repoussée sur l'épanouissement ( 14 ) polaire au moyen d'un ressort ( 24 ) disposée entre la bobine ( 18 ) polaire et la pièce ( 12 ) de rotor,
dans laquelle il est produit un canal ( 34 ) axial de refroidissement par la distance ménagée par le ressort ( 24 ) entre la bobine ( 18 ) polaire et la pièce ( 12 ) de rotor,
dans laquelle le ressort ( 24 ) a deux segments ( 26, 28 ) sensiblement en forme de U et se recouvrant l'un l'autre en partie, deux bobines ( 18 ) polaires étant repoussées sur respectivement un épanouissement ( 14 ) polaire associé au moyen du ressort ( 24 ),
**caractérisée**
**en ce que** les segments ( 26, 28 ) forment conjointement sensiblement une forme en O, qui est ouverte en un point ( 30 ) et
**en ce que** l'ouverture ( 30 ) de la forme en O est orientée vers un appui ( 22 ) de bobine monté entre les deux bobines ( 18 ) polaires.

2. Machine à pôles saillants suivant la revendication 1,
**caractérisée en ce que**
le ressort ( 24 ) est un ressort à lame, notamment courbée.

3. Machine à pôles saillants suivant la revendication 1,
**caractérisée en ce que**
le ressort ( 24 ) est fixé à la pièce ( 12 ) de rotor par au moins un moyen ( 32 ) de fixation du côté opposé à l'ouverture ( 30 ) de la forme en O.

4. Machine à pôles saillants suivant l'une des revendications 1 à 3,
**caractérisée en ce que**
le ressort ( 24 ) a une raideur comprise entre environ 1 et 4 N/mm, notamment entre environ 2 et 3 N/mm.

5. Machine à pôles saillants suivant l'une des revendications 1 à 4,
**caractérisée en ce que**
le ressort ( 24 ) est conformé de manière à ce qu' à l'état bandé son point d'application à la bobine ( 18 ) polaire associée ou à un élément ( 20 ) isolant qui y est disposé soit un peu éloigné de l'axe de gravité de la bobine ( 18 ) polaire, en étant notamment à une distance de 2 à 5 mm, et de manière très préférée à une distance d'environ 3,5 mm.

6. Machine à pôles saillants suivant l'une des revendications 1 à 5,
**caractérisée en ce que**
dans au moins une bobine ( 18 ) polaire, est formé au moins un canal ( 36 ) de refroidissement, qui est dirigé sensiblement radialement et au moyen duquel il est ménagé une communication fluidique entre ledit canal ( 34 ) axial de refroidissement et le côté extérieur de l'épanouissement ( 14 ) polaire.
